**Europäisches Patentamt**

**European Patent Office**

**Office européen des brevets**

(19)

(11) **EP 1 231 473 A1**

(12) **EUROPÄISCHE PATENTANMELDUNG**

(43) Veröffentlichungstag:
**14.08.2002 Patentblatt 2002/33**

(51) Int Cl.⁷: **G01P 15/08**, G01P 15/00

(21) Anmeldenummer: **01122992.9**

(22) Anmeldetag: **26.09.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **22.12.2000 DE 10064170**

(71) Anmelder: **STN ATLAS Elektronik GmbH
28305 Bremen (DE)**

(72) Erfinder:
• **Scherm, Norbert, Dr.
28195 Bremen (DE)**
• **Warmers, Heinrich, Dr.
28844 Weyhe (DE)**

(74) Vertreter: **Thul, Hermann, Dipl.-Phys.
Zentrale Patentabteilung,
Rheinmetall AG,
Rheinmetall Allee 1
40476 Düsseldorf (DE)**

(54) **Vorrichtung zur Messung von Beschleunigung und/oder Winkelgeschwindigkeit**

(57) Bei einer Vorrichtung zur Messung von Beschleunigung und/oder Winkelgeschwindigkeit in mindestens einer Meßachse (x, y, z) ist zur Erzielung einer hohen Meßgenauigkeit bei kostengünstiger Fertigung eine Vielzahl von als Beschleunigungsmesser ausgebildeten Meßaufnehmern (11) und/oder eine Vielzahl von als Winkelgeschwindigkeitsmesser ausgebildeten Meßaufnehmern (11) in einer Ebene derart angeordnet, daß die Meßempfindlichkeitsachsen (22) der Meßaufnehmer (11) parallel zu der mindestens einen Meßachse ausgerichtet sind. Jeweils die Signalausgänge gleichartiger Meßaufnehmer (11) liegen an einer Recheneinheit zur Mittelwertbildung, die die Mittelwerte der pro Meßachse (x, y, z) aufsummierten Signale als Beschleunigungs- und/oder Winkelgeschwindigkeitssignale ausgibt (Fig. 1).

Fig. 1

EP 1 231 473 A1

**Beschreibung**

Die Erfindung betrifft eine Vorrichtung zur Messung von Beschleunigung und/oder Winkelgeschwindigkeit in mindestens einer Meßachse der im Oberbegriff des Anspruchs 1 definierten Gattung.

Eine solche bekannte Vorrichtung, auch Inertialmeßeinheit genannt, besitzt eine Gruppe von drei Beschleunigungsmessern und eine Gruppe von drei Kreiseln, die auf einer schockisolierten Struktur montiert sind. Die drei Beschleunigungsmesser dienen zur Messung der translatorischen Beschleunigung und die drei Kreisel zur Messung der Winkelgeschwindigkeit in drei orthogonalen Meßachsen. Die von der Vorrichtung ausgegebenen Beschleunigungs- und Drehratensignale werden in Navigations- und Führungssystemen eingespeist, dienen aber auch zur Stabilisierungsregelung von Beobachtungsplattformen.

Bei einer bekannten Vorrichtung zur Messung von Beschleunigungen (US 4 920 801) wird ein monolithischer Beschleunigungsmesser verwendet, der lineare Beschleunigungen in drei orthogonalen Achsen sensiert.

Ein bekannte Vorrichtung zur Messung von Beschleunigung und Winkelgeschwindigkeit in drei orthogonalen Meßachsen (US 5 396 797) umfaßt drei einzelne Sensoren, die auf einem Substrat, z.B. Silikon, um 120° gegeneinander versetzt angeordnet sind. Jeder Sensor wird von zwei Beschleunigungsmessern gebildet, deren Achsen einerseits in einem Winkel zur Subtratebene ausgerichtet und andererseits einander entgegengerichtet sind, so daß insgesamt sechs Beschleunigungsmesser in der Vorrichtung vorhanden sind.

Der Erfindung liegt die Aufgabe zugrunde, eine Vorrichtung zur Messung von Beschleunigung und/oder Winkelgeschwindigkeit der eingangs genannten Art mit hoher Meßgenauigkeit kostengünstig zu realisieren.

Die Aufgabe ist erfindungsgemäß durch die Merkmale im Anspruch 1 gelöst.

Die erfindungsgemäße Vorrichtung mit den Merkmalen des Anspruchs 1 hat den Vorteil, daß durch die Vielzahl der parallel messenden Meßaufnehmer, also der Beschleunigungsmesser und/oder Winkelgeschwindigkeitsmesser, letztere auch Drehratengeber genannt, die Meßaufnehmer selbst eine relativ geringe Meßqualität aufweisen können, ohne daß dadurch die hohen Anforderungen an die Meßqualität der Vorrichtung reduziert werden müssen. Das Auswerten des jeweiligen Kollektivs der Beschleunigungsmesser und/oder der Drehratengeber durch Mittelwertbildung ihrer Ausgangssignale reduziert die Streuung von Zufallsfehlern, wie Rauschen, Achsdejustage und Temperaturabhängigkeit der einzelnen Meßaufnehmer um den Faktor $1/\sqrt{n}$, wobei n die Zahl der Meßaufnehmer des Kollektivs ist. Meßaufnehmer mit relativ geringer Meßgenauigkeit sind im Markt sehr viel preiswerter erhältlich, so daß selbst bei der Vielzahl der verwendeten Meßaufnehmern noch ein Kostenvorteil gegenüber einem einzigen Meßaufnehmer mit der dem Kollektiv eigenen hohen Meßgenauigkeit erzielt wird. Zudem ergibt sich aufgrund der hohen Redundanz eine beträchtliche Robustheit der Vorrichtung gegen Ausfälle einiger Meßaufnehmer. Da die Meßaufnehmer bereits in sehr kleiner Bauform erhältlich sind, kann das Bauvolumen der Vorrichtung trotz der Vielzahl der Meßaufnehmer in ausreichend kleinen Grenzen gehalten werden.

Zweckmäßige Ausführungsformen der erfindungsgemäßen Vorrichtung mit vorteilhaften Weiterbildungen und Ausgestaltungen der Erfindung ergeben sich aus den weiteren Ansprüchen.

Gemäß einer vorteilhaften Ausführungsform der Erfindung sind die Meßaufnehmer auf einer Leiterplatte parallel zueinander angeordnet, und die Leiterplatte ist so ausgerichtet, daß die Meßempfindlichkeitsachsen der Meßaufnehmer sich längs oder parallel zu der mindestens einen Meßachse erstrecken. Für eine zweiachsige Ausführung der Vorrichtung sind im Falle, daß die Meßempfindlichkeitsachsen parallel zu den Aufspannflächen der Meßaufnehmer ausgerichtet sind, also mit den Längsachsen der Meßaufnehmer fluchten, die Meßaufnehmer auf der Leiterplatte so angeordnet, daß die Meßempfindlichkeitsachsen von jeweils der Hälfte der Meßaufnehmer parallel zu der einen und zu der anderen Meßachse ausgerichtet sind. Die mit den Meßaufnehmern bestückte Leiterplatte liegt dann in der von den beiden Meßachsen aufgespannten Ebene. Dabei sind bevorzugt die den zwei verschiedenen Meßachsen zugehörigen Meßaufnehmer in Reihe und Spalte abwechselnd aufeinanderfolgend angeordnet, so daß nur verschiedenen Meßachsen zugehörige Meßaufnehmer einander unmittelbar benachbart sind. Diese Maßnahme dient der mechanischen Entkopplung der Meßaufnehmer und damit der Unterdrückung systematischer Fehler, die durch die Geometrie des Aufbaus bedingt sind.

Gemäß einer vorteilhaften Ausführungsform der Erfindung werden die Meßaufnehmer für eine dritte orthogonale Meßachse auf mindestens einer Leiterplatte angeordnet, die rechwinklig zu der ersten Leiterplatte ausgerichtet ist. Um kleine Abmessungen zu erzielen, sind vorteilhaft die Meßaufnehmer für die dritte orthogonale Meßachse auf insgesamt zwei parallele Leiterplatten aufgeteilt, die bei rechteckförmiger Ausbildung der Leiterplatten an voneinander abgekehrten Kanten der ersten Leiterplatte rechtwinklig zu dieser angeordnet sind. Werden die Leiterplatten über eine sog. Flexprintlayer flexibel miteinander verbunden, so läßt sich die Bestückung der Leiterplatten und die anschließende Aufstellung der beiden äußeren Leiterplatten für die dritte orthogonale Meßachse fertigungstechnisch leicht realisieren.

Im Falle, daß die Meßempfindlichkeitsachsen der Meßaufnehmer senkrecht zu deren Aufspannflächen ausgerichtet sind, sind gemäß einer bevorzugten Ausführungsform der Erfindung für jede weitere Meßachse die Meßaufnehmer in entsprechender Weise auf einer weiteren Leiterplatte angeordnet, und jede weitere Leiterplatte ist rechtwinklig zu den anderen Leiterplatten ausgerichtet. Sind die Leiterplatten wiederum rechtwinklig ausgebildet und flexibel miteinander verbunden, so wird eine Leiterplatte längs der Längskante und eine Leiterplatte längs der Querkante der einen Leiterplatte um 90° hochgestellt.

Gemäß vorteilhafter Ausführungsformen der Erfindung erfolgt die Mittelwertbildung der Ausgangssignale der Meßaufnehmer nach Digitalisierung der Ausgangssignale in einem Mikroprozessor, wobei die Ausgangssignale der jeweils einer Meßachse zugehörigen gleichartigen Meßaufnehmer, also Beschleunigungsmesser oder Winkelgeschwindigkeitsmesser, von einem Multiplexer abgefragt werden können, dessen Ausgang über einen AD/Wandler mit dem Mikroprozessor verbunden ist.

Die Mittelwertbildung kann aber auch gemäß einer weiteren Ausführungsform der Erfindung durch ein analoges Summierglied erfolgen, dessen Verstärkung so gewählt ist, daß das Ausgangssignal des Summierers den Mittelwert des Summensignals bildet.

Die Erfindung ist anhand von in der Zeichnung dargestellten Ausführungsbeispielen im folgenden näher beschrieben. Es zeigen:

Fig. 1      eine perspektive Darstellung eines Meßaufnehmerfeldes einer Vorrichtung zur Messung von Beschleunigung und/ oder Winkelgeschwindigkeit in einem Zwischenmontagestadium,

Fig. 2      eine schematisierte Explosionsdarstellung des Meßaufnehmerfeldes in Fig. 1 nach Endfertigung,

Fig.3      eine perspektivische Darstellung eines Meßaufnehmers im Meßaufnehmerfeld gemäß Fig. 1,

Fig.4 und 5      jeweils eine gleiche Darstellung wie in Fig. 1 und 2 der Vorrichtung zur Messung von Beschleunigung und/oder Winkelgeschwindigkeit gemäß einem weiteren Ausführungsbeispiel,

Fig. 6      eine perspektivische Darstellung eines Meßaufnehmers in der Vorrichtung gemäß Fig. 4,

Fig. 7 bis 9      jeweils ein Blockschaltbild der Vorrichtung in Fig. 1 - 3 oder Fig. 4 - 6 gemäß dreier Ausführungsbeispiele.

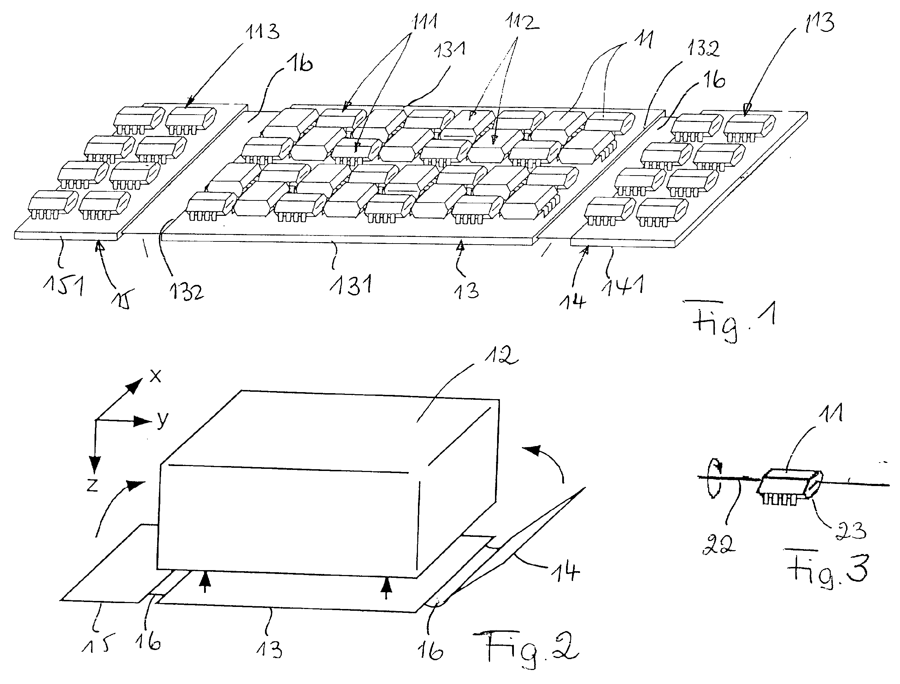

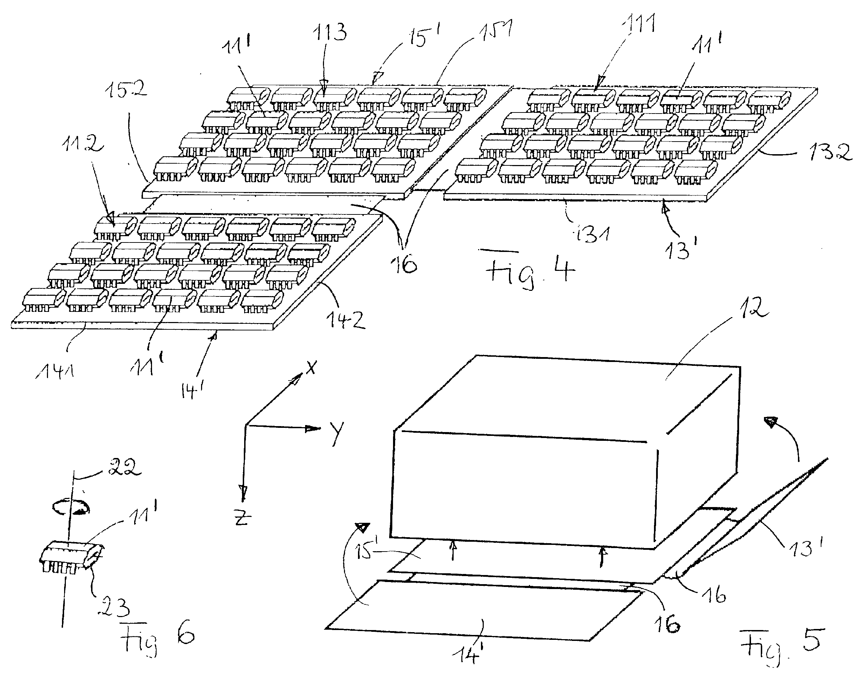

Die mit ihrem Meßaufnehmerfeld in Fig. 1 im Zwischenmontagestadium und in Fig. 2 schematisch im Endmontagestadium dargestellte Vorrichtung zur Messung von Beschleunigung und/oder Winkelgeschwindigkeit in drei Meßachsen x, y, z weist eine Vielzahl von Meßaufnehmern 11 auf, die auf einem hier als massiver Metallblock ausgebildeten, verwindungssteifen, quaderförmigen Träger 12 in fester räumlicher Zuordnung zueinander und zu den Meßachsen x, y, z festgelegt sind. Sind alle Meßaufnehmer 11 als Beschleunigungsmesser ausgebildet, so kann mit der Vorrichtung eine translatorische Beschleunigung des Trägers 12 in den drei Meßachsen x, y, z gemessen werden. Werden als Meßaufnehmer 11 Winkelgeschwindigkeitsmesser, sog. Drehratengeber verwendet, so können mit der Vorrichtung Winkelgeschwindigkeiten des Gehäuses 11 um jede der drei Meßachsen x, y, z gemessen werden. Sind am Träger 12 sowohl als Beschleunigungsmesser als auch als Winkelgeschwindigkeitsmesser ausgebildete Meßaufnehmer 11 vorhanden, so vermag die Vorrichtung sowohl Beschleunigungen als auch Winkelgeschwindigkeiten in den drei Meßachsen x, y, z zu messen.

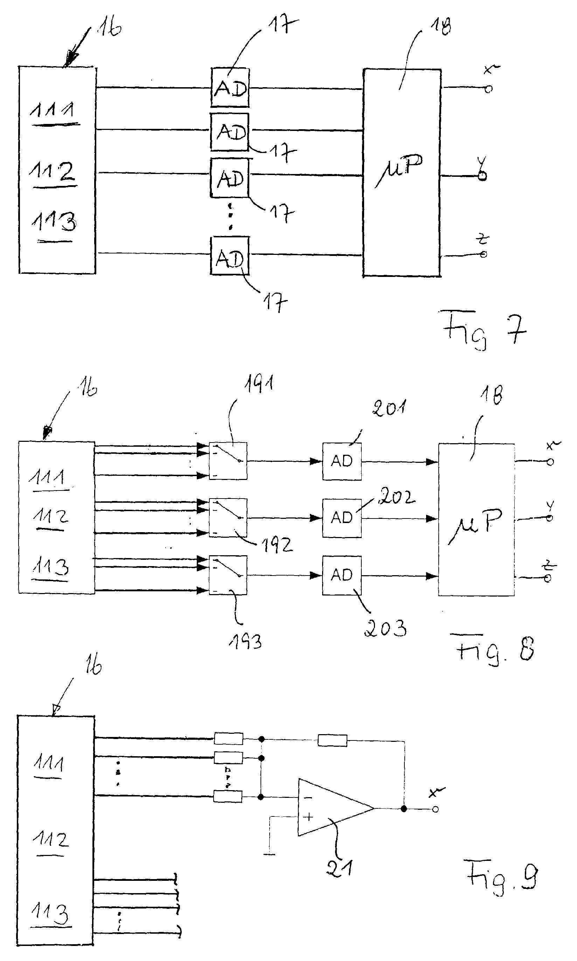

Wie in Fig. 1 dargestellt ist, ist die Vielzahl der Meßaufnehmer 11 in drei Kollektive 111, 112 und 113 unterteilt, die jeweils einer der Meßachsen y, x, z zugeordnet werden. Die beiden Kollektive 111 und 112 sind dabei auf einer rechteckigen Leiterplatte 13 angeordnet, und das Kollektiv 113 ist auf zwei rechteckigen Leiterplatten 14 und 15 aufgeteilt. Dabei sind die steifen Leiterplatten 13 - 15 über eine gedruckte Leiterbahnen enthaltende, flexible Schicht 16, eine sog. Flexprintlayer, miteinander verbunden. Die Meßaufnehmer 11 besitzen eine Achse größter Meßempfindlichkeit, im folgenden Meßempfindlichkeitsachse 22 genannt, die mit der Längsachse der Meßaufnehmer 11 zusammenfällt und sich parallel zu einer Aufspannfläche 23 erstreckt, die der mechanischen Festlegung und elektrischen Kontaktierung des Meßaufnehmers 11 auf der Leiterplatte 13, 14, 15 dient, wie dies in Fig. 3 für einen Meßaufnehmer 11 illustriert ist. Die dem Kollektiv 111 zugehörigen Meßaufnehmer 11 sind auf der Leiterplatte 13 so angeordnet, daß die Meßempfindlichkeitsachsen 22 parallel zur Längskante 131 ausgerichtet sind. Da nach dem späteren Befestigen der Leiterplatte 13 - 15 am Träger 12 (Fig. 2) die Längskante 131 parallel zur Meßachse y ausgerichtet ist, sind die Meßempfindlichkeitsachsen 22 der Meßaufnehmer 11 des Kollektivs 111 damit parallel zur Meßachse y angeordnet. Die dem Kollektiv 112 zugehörigen Meßaufnehmer 11 sind mit ihren Meßempfindlichkeitsachsen 22 parallel zur Querkante 132 der Leiterplatte 13 ausgerichtet und damit parallel zur Meßachse x. Bei dem auf die Leiterplatten 14 und 15, die den voneinander abgekehrten, parallelen Querkanten 132 der Leiterplatte 13 benachbart sind, aufgeteilten Kollektiv 113 sind die Meßempfindlichkeitsachsen 22 der Meßaufnehmer 11 parallel zu den Längskanten 141 und 151 der Leiterplatte 14 bzw. 15 ausgerichtet. Werden nunmehr beim Ansetzen der Leiterplatten 13, 14 und 15 an den Träger 12 - wie dies in Fig. 2 durch Montagepfeile symbolisiert ist - die beiden Leiterplatten 14, 15 rechtwinklig zur Leiterplatte 13 angestellt, so liegen die Meßempfindlichkeitsachsen 22 der Meßaufnehmer 11 im Kollektiv 113 parallel zur Meßachse z.

Zur mechanischen Entkopplung der Meßaufnehmer 11 auf der Leiterplatte 13 und zur Unterdrükkung systematischer Fehler, die durch die Geometrie des Aufbaus bedingt sind, sind die Meßaufnehmer 11 in Reihe und Spalte abwechselnd aufeinanderfolgend angeordnet, und zwar so, daß nur verschiedenen Kollektiven 111 und 112, zugehörige Meßaufnehmer 11 einander unmittelbar benachbart sind.

Die in Fig. 1 in der beschriebenen Weise mit der Vielzahl von Meßaufnehmern 11 bestückten, miteinander flexibel verbundenen Leiterplatten 13,14, 15 werden, wie dies in der Explosionsdarstellung in Fig. 2 zu sehen ist, mit ihrer von den Meßaufnehmern 11 abgekehrten Unterseite auf den Träger 12 aufgesetzt, wobei die beiden Leiterplatten 14, 15 in einem rechten Winkel zur Leiterplatte 13 abgebogen werden. Nach Aufsetzen und Befestigen der bestückten Leiterplatten 13, 14, 15 sind die Meßaufnehmer 11 in ihrer räumlichen Zuordnung zueinander fest fixiert und jeweils ein Kollektiv 111, 112, 113 der Meßaufnehmer 11 mit den Meßempfindlichkeitsachsen 22 parallel zu einer Meßachse y, x, z ausgerichtet. Wie nicht weiter dargestellt ist, wird der mit dem Leiterplatten 13, 14, 15 belegte Träger 12 von einem Schutzgehäuse aufgenommen.

Bei dem Ausführungsbeispiel der Vorrichtung zur Messung von Beschleunigung und/oder Winkelgeschwindigkeit in drei Meßachsen x, y, z gemäß den Fig. 4 - 6 sind als Beschleunigungsmesser oder Winkelgeschwindigkeitsmesser ausgebildete Meßaufnehmer 11' verwendet, deren Meßempfindlichkeitsachse 22 jeweils rechtwinklig zu ihrer Aufspannfläche 23 liegt, wie dies in Fig. 6 für einen Meßaufnehmer 11' illustriert ist. Wiederum ein Kollektiv 111, 112 und 113 der Meßaufnehmer 11' ist einer der Meßachsen y, x, z zugeordnet, wobei die parallel ausgerichteten Meßempfindlichkeitsachsen 22 der einem Kollektiv 111 bzw. 112 bzw. 113 zugehörigen Meßaufnehmer 11' parallel zu der zugeordneten Meßachse y, x, z ausgerichtet sind. Die Meßaufnehmer 11' sind pro Kollektiv 111, 112, 113 mit ihren Aufspannflächen 23 auf einer rechteckigen, steifen Leiterkarte 13' 14' und 15' angeordnet, so daß ihre Meßempfindlichkeitsachsen 22 parallel zueinander und rechtwinklig zur Leiterplattenebene liegen. Die wiederum über eine flexible Schicht 16 (Flexprintlayer) miteinander verbundenen Leiterkarten 13', 14', 15' sind so angeordnet, daß eine Querkante 132 der Leiterplatte 13' der einen Querkante 152 der Leiterplatte 15' und eine Längskante 141 der Leiterplatte 14' der einen Längskante 151 der Leiterplatte 15' jeweils zugekehrt und parallel zu dieser ausgerichtet ist. Zum Anbau der bestückten Leiterplatten an den Träger 12, wie dies in Fig. 5 durch die Montagepfeile angedeutet ist, werden die Leiterplatten 13' und 14' jeweils um 90° angestellt und an die voneinander abgekehrten Seitenflächen des quaderförmigen Trägers 12 angesetzt, während die Leiterplatte 15' auf der Unterseite des Trägers 12 befestigt wird. In dieser Konfiguration sind die Meßempfindlichkeitsachsen 22 des Kollektivs 112 auf der Leiterplatte 14' parallel zur Meßachse x, die Meßempfindlichkeitsachsen 22 des Kollektivs 111 der Meßaufnehmer 11' auf der Leiterplatte 13' parallel zur Meßachse y und die Meßempfindlichkeitsachsen 22 des Kollektivs 113 der Meßaufnehmer 11' auf der Leiterplatte 15' parallel zur Meßachse z ausgerichtet.

Zur Erzielung einer geringen Bauhöhe des Trägers 12 sind in einer hier nicht illustrierten Ausführungsform die Kollektive 111 und 112 der Meßwertaufnehmer 11' auf den Leiterplatten 13' und 14' jeweils auf zwei Leiterplatten mit halber Plattenfläche aufgeteilt. Das Kollektiv 111 der Meßaufnehmer 11' liegt damit auf zwei Leiterplatten, die an die Querkanten 152 der Leiterplatte 15' angrenzen, und das Kollektiv 112 der Meßaufnehmer 11' liegt auf zwei Leiterplatten, die an den Längskanten 151 der Leiterplatte 15' angrenzen. Werden nunmehr die so bestückte Leiterplatten 13', 14', 15' in der in Fig. 5 dargestellten Weise auf dem Träger 12 befestigt, so besetzen die Kollektive 111 und 112 alle vier Seitenflächen des Trägers 12, während die Leiterplatte 15' mit dem Kollektiv 113 der Meßaufnehmer 11' wiederum die Unterseite des Trägers 12 überdeckt.

Zur Gewinnung der von der Vorrichtung ausgegeben Beschleunigungs- und/oder Winkelgeschwindigkeitssignale wird von den Ausgangssignalen aller parallel messenden Meßaufnehmer 11 bzw. 11' eines Kollektivs 111, 112 und 113 der Mittelwert gebildet, wodurch die Streuung von Zufallsfehlern, wie Rauschen, Achsdejustage und Temperaturabhängigkeit der Meßaufnehmer 11 bzw. 11' reduziert wird, und zwar um dem Faktor $1/\sqrt{n}$, wenn n die Anzahl der Meßaufnehmer 11 bzw. 11' eines Kollektivs 111 bzw. 112 bzw. 113 ist. Dies ermöglicht eine rauscharme Messung von Beschleunigung und Winkelgeschwindigkeit bzw. Drehrate in drei orthogonalen Raumrichtungen, obwohl die einzelen Meßaufnehmer 11 bzw. 11' ihre Meßgrößen mit einem größeren Rauschsignal liefern.

In Fig. 7 - 8 sind drei verschiedene Ausführungsbeispiele für die Signalverarbeitung im Blockschaltbild dargestellt. Bei allen drei Fig. ist die mit den drei Kollektiven 111, 112, 113 der Meßnehmer 11 bzw. 11' bestückte Leiterkarte 16 als Block dargestellt. Zur Vereinfachung wird nachfolgend nur die Signalverarbeitung für die Meßaufnehmer 11 der Vorrichtung gemäß Fig. 1 - 3 beschrieben. Sie gilt jedoch in gleicher Weise für Meßaufnehmer 11' in Fig. 4 - 6.

Bei der Schaltungsanordnung gemäß Fig. 7 sind alle Signalausgänge der Meßaufnehmer 11 über jeweils einen A/D-Wandler 17 an einem Mikroprozessor 18 angeschlossen, wobei vorzugsweise die digitale Übertragung zu dem Mikroprozessor 18 mittels eines hier nicht dargestellten Feldbusses (CAN, I²L) erfolgt. Im Mikroprozessor 18 wird für jedes Kollektiv 111, 112 und 113 gleichartiger Meßaufnehmer 11, also als Beschleunigungsmesser oder als Winkelgeschwindigkeitsmesser ausgebildeter Meßaufnehmer 11, der Mittelwert pro Kollektiv 111, 112, 113, also pro Meßphase x, y, z, gebildet. Je nachdem, ob ausschließlich Beschleunigungsmesser oder ausschließlich Winkelgeschwindigkeitsmesser als Meßaufnehmer 11 vorhanden sind, liefert der Mikroprozessor 18 an seinem Ausgang ein Beschleunigungs- oder Winkelgeschwindigkeitssignal. Sind beide Arten von Meßaufnehmern 11 vorhanden, so kann an dem Ausgang des Mikroprozessors 18 sowohl ein Beschleunigungs- als auch ein Winkelgeschwindigkeitssignal pro Meßachse x, y, z abgenommen werden.

Bei der Schaltungsanordnung gemäß Fig. 8 sind die Signalausgänge der jeweils einer Meßachse x, y, z, also einem Kollektiv 111, 112 und 113, zugehörigen, gleichartigen Meßaufnehmer 11 an einem Multiplexer 191, 192, 193 angeschlossen, so daß die einzelnen Signalausgänge der Meßaufnehmer 11 eines jeden Kollektivs 111, 112, 113 nacheinander an dem Ausgang des Multiplexers 191 bzw. 192 bzw. 193 liegen. Der Ausgang eines jeden Multiplexers 191, 192, 193 ist über einen A/D-Wandler 201, 202, 203 mit dem Mikroprozessor 18 verbunden, in dem wiederum von den Ausgangssignalen eines jeden Kollektivs 111, 112, 113 der Meßaufnehmer 11 der Mittelwert gebildet wird, so daß an den drei Ausgängen des Mikroprozessors 18 jeweils ein Beschleunigungssignal oder ein Winkelgeschwindigkeitssignal pro Meßachse x, y, z abgenommen werden kann.

Bei beiden Schaltungsanordnungen sind im Mikroprozessor 18 Kalibrierkurven abgespeichert, die zur Kompensation von Meßfehlern durch Temperaturgang und Dejustage der Meßempfindlichkeitsachsen 22 der Meßaufnehmer 11 genutzt werden.

Mit der Schaltungsanordnung gemäß Fig. 9 wird eine analoge Verarbeitung der Ausgangssignale der Meßaufnehmer 11 durchgeführt. Jeweils die Signalausgänge eines Kollektivs 111 bzw. 112 bzw. 113 der Meßaufnehmer 11 sind an dem invertierten Eingang eines Summierverstärkers 21 angeschlossen. Die Verstärkung des Summierverstärkers 21 ist so eingestellt, daß am Ausgang des Summierverstärkers 21 der Mittelwert des Summensignals ansteht. Die zu verarbeiteten Ausgangssignale der drei Kollektive 111, 112, 113 der als Beschleunigungsmesser ausgebildeten Meßaufnehmer 11 oder der als Winkelgeschwindigkeitsmesser ausgebildeten Meßaufnehmer 11 erfordert drei Summierverstärker 21. Sollen Beschleunigung und Drehraten in drei Meßachsen x, y, z gemessen werden und sind demzufolge auf der Leiterkarte 16 drei Kollektive von als Beschleunigungsmesser ausgebildeten Meßaufnehmern 11 und drei Kollektive von als Winkelgeschwindigkeitsmesser ausgebildeten Meßaufnehmern 11 vorhanden, so sind insgesamt sechs Summierverstärker 21 vorhanden, an deren sechs Ausgängen jeweils ein Beschleunigungs- und ein Winkelgeschwindigkeitssignal für die drei Meßachsen x, y, z abnehmbar ist.

Die Meßaufnehmer 11 bzw. 11' sind als mikromechanische Beschleunigungsmesser und als mikromechanische Drehratengeber in Form von recht kleinvolumigen Bauelementen auf dem Markt verfügbar, so daß trotz der Vielzahl der verwendeten Meßaufnehmer 11 bzw. 11' (im Ausführungsbeispiel der Fig. 1 jeweils sechzehn Meßaufnehmer 11 pro Kollektiv 111, 112, 113 und im Ausführungsbeispiel der Fig. 4 jeweils vierundzwanzig Meßaufnehmer 11' pro Kollektiv 111, 112, 113) noch vertretbare Raumabmessungen des Trägers 12 erreicht werden.

**Patentansprüche**

1. Vorrichtung zur Messung von Beschleunigung und/ oder Winkelgeschwindigkeit in mindestens einer Meßachse (x, y, z) mit auf einem Träger (12) in fester räumlicher Zuordnung zueinander festgelegten Meßaufnehmern (11; 11'), **dadurch gekennzeichnet, daß** eine Vielzahl von als Beschleunigungsmesser ausgebildeten Meßaufnehmern (11; 11') und/oder eine Vielzahl von als Winkelgeschwindigkeitsmesser ausgebildeten Meßaufnehmern (11; 11') in einer Ebene derart angeordnet ist, daß die Meßempfindlichkeitsachsen (22) der Meßaufnehmer (11; 11') parallel zu der mindestens einen Meßachse (x, y, z) ausgerichtet sind, und daß jeweils die Signalausgänge gleichartig ausgebildeter Meßaufnehmer (11; 11') an einer Recheneinheit zur Mittelwertbildung liegen, die die Mittelwerte der pro Meßachse (x, y, z) aufsummierten Ausgangssignale der Meßaufnehmer (11; 11') als Beschleunigungs- und/oder Winkelgeschwindigkeitssignale ausgibt.

2. Vorrichtung nach Anspruch 1, **dadurch gekennzeichnet, daß** die Anordnung der Meßaufnehmer (11; 11') auf einer Leiterplatte (13, 14, 15; 13', 14', 15') vorgenommen ist und daß die Leiterplatte (13, 14, 15; 13', 14', 15') so ausgerichtet ist, daß die Meßempfindlichkeitsachsen (22) der Meßaufnehmer (11; 11')sich längs oder parallel zu der mindesten einen Meßachse (x, y, z) erstrecken.

3. Vorrichtung nach Anspruch 2, **dadurch gekennzeichnet, daß** die Meßaufnehmer (11) so ausgebildet sind, daß ihre Meßempfindlichkeitsachse (22) parallel zu ihrer Aufspannfläche (23) liegt, daß für zwei orthogonale Meßachsen (x, y) die Anordnung der Meßaufnehmer (11) auf der Leiterplatte (13) so getroffen ist, daß die Meßempfindlichkeitsachsen (22) von jeweils der Hälfte der Meßaufnehmer (11) parallel zu der einen und zu der andere Meßachse (x, y) ausgerichtet sind und daß die Leiterplatte (13) in oder parallel zu der von den beiden Meßachsen (x, y) aufgespannten Ebene ausgerichtet ist.

4. Vorrichtung nach Anspruch 3, **dadurch gekenn-**

**zeichnet, daß** die zwei verschiedenen Meßachsen (x, y) zugehörigen Meßaufnehmer (11) in Reihe und Spalte abwechselnd aufeinanderfolgend angeordnet sind, so daß nur verschiedenen Meßachsen (x, y) zugehörige Meßaufnehmer (11) einander unmittelbar benachbart sind.

5. Vorrichtung nach Anspruch 3 oder 4, **dadurch gekennzeichnet, daß** die Meßaufnehmer (11) für eine dritte orthogonale Meßachse (z) auf mindestens einer weiteren Leiterplatte (14, 15) angeordnet sind, die rechtwinklig zu der ersten Leiterplatte (13) ausgerichtet ist.

6. Vorrichtung nach Anspruch 5, **dadurch gekennzeichnet, daß** die Meßaufnehmer (11) für die dritte orthogonale Meßachse (z) auf insgesamt zwei Leiterplatten (14, 15) aufgeteilt sind, die parallel zueinander angeordnet sind.

7. Vorrichtung nach Anspruch 6, **dadurch gekennzeichnet, daß** die Leiterplatten (13, 14, 15) rechteckförmig ausgebildet und miteinander flexibel verbunden sind.

8. Vorrichtung nach Anspruch 2, **dadurch gekennzeichnet, daß** die Meßaufnehmer (11') so ausgebildet sind, daß ihre Meßempfindlichkeitsachse (22) rechtwinklig zu ihrer Aufspannfläche (23) liegt, daß für jede weitere Meßachse (y, z) die Meßaufnehmer (11') auf einer weiteren Leiterplatte (14', 15') angeordnet sind und daß jede weitere Leiterplatte (14', 15') rechtwinklig zu den anderen Leiterplatten (13', 14', 15') ausgerichtet ist.

9. Vorrichtung nach Anspruch 8, **dadurch gekennzeichnet, daß** die Leiterplatten (13', 14', 15') rechteckförmig ausgebildet und flexibel miteinander verbunden sind und daß eine Leiterplatte (14') sich längs der Längskante (151') und eine Leiterkarte (13') sich längs der Querkante (132') einer dritten Leiterkarte (13') erstreckt.

10. Vorrichtung nach Anspruch 7, **dadurch gekennzeichnet, daß** die Leiterplatten (13', 14', 15') rechteckförmig ausgebildet und flexibel miteinander verbunden sind und daß zwei Leiterplatten (14') sich an zwei voneinander abgekehrten parallelen Längskanten (151) und zwei Leiterplatten (13') sich an zwei voneinander abgekehrten parallelen Querkanten (152) einer dritten Leiterkarte (15') erstrekken.

11. Vorrichtung nach einem der Ansprüche 7 - 10, **dadurch gekennzeichnet, daß** die flexible Verbindung der Leiterplatten (13, 14, 15; 13', 14', 15') mit einer oder mehreren sog. Flexprintlayer hergestellt ist.

12. Vorrichtung nach einem der Ansprüche 1 - 11, **dadurch gekennzeichnet, daß** die Signalausgänge der Meßaufnehmer (11) über jeweils einen Analog-Digital-Wandler (17) an einem Mikroprozessor (18) angeschlossen sind, der die Mittelwertbildung der Ausgangssignale gleichartiger Meßaufnehmer (11) pro Meßachse (x, y, z) durchführt.

13. Vorrichtung nach einem der Ansprüche 1 - 11, **dadurch gekennzeichnet, daß** die Signalausgänge der jeweils einer Meßachse (x, y, z) zugehörigen, gleichartigen Meßaufnehmer (11; 11') an einen Multiplexer (191, 192, 193) gelegt sind, dessen Ausgang über einen Analog-Digital-Wandler (201, 202, 203) mit einem die Mittelwertbildung durchführenden Mikroprozessor (18) verbunden ist.

14. Vorrichtung nach einem der Ansprüche 1 - 11, **dadurch gekennzeichnet, daß** die Signalausgänge der jeweils einer Meßachse (x, y, z) zugehörigen, gleichartigen Meßaufnehmer (11; 11') mit einem analogen Summierverstärker (21) verbunden sind.

Fig. 1

Fig. 2

Fig. 3

EP 1 231 473 A1

15.2

11'  113  15'  157  111  11'

152

112

13.2

141  11'  142  131  13'

16  Fig. 4

X

Y

Z

22

11'

12

23  Fig. 6

15'  13'

16

16  Fig. 5

14'

EP 1 231 473 A1

Fig 7

Fig. 8

Fig. 9

| Europäisches Patentamt | **EUROPÄISCHER RECHERCHENBERICHT** | Nummer der Anmeldung EP 01 12 2992 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 084 774 A (KIMBERLEY DAVID) 18. April 1978 (1978-04-18) | 1,12 | G01P15/08 G01P15/00 |
| Y | * Spalte 1 * | 2,3, 5-11,13, 14 | |
| | * Spalte 5, Zeile 51 * * Spalte 6, Absatz 2 * * Spalte 7 * | | |
| Y | US 5 942 685 A (TABOTA JUN) 24. August 1999 (1999-08-24) * Zusammenfassung; Abbildungen 1,3 * | 2,3 | |
| Y | EP 0 557 917 A (MANNESMANN KIENZLE GMBH) 1. September 1993 (1993-09-01) * Spalte 3, Absatz 4 - Spalte 4, Absatz 2 * | 2,3,5-11 | |
| Y | DE 36 00 763 A (BODENSEEWERK GERAETETECH) 16. Juli 1987 (1987-07-16) * Spalte 5, Absatz 4 * | 13 | RECHERCHIERTE SACHGEBIETE (Int.Cl.7) |
| Y | GB 2 146 775 A (FERRANTI PLC) 24. April 1985 (1985-04-24) * Anspruch 4; Abbildung 1 * | 14 | G01P |
| A | PATENT ABSTRACTS OF JAPAN vol. 011, no. 264 (P-610), 27. August 1987 (1987-08-27) & JP 62 067601 A (HITACHI LTD), 27. März 1987 (1987-03-27) * Zusammenfassung * | 1 | |
| | -/-- | | |

Der vorliegende Recherchenbericht wurde für alle Patentansprüche erstellt

| Recherchenort MÜNCHEN | Abschlußdatum der Recherche 5. März 2002 | Prüfer Felicetti, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 01 12 2992

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN vol. 017, no. 363 (P-1570), 8. Juli 1993 (1993-07-08) & JP 05 053658 A (TOSHIBA CORP), 5. März 1993 (1993-03-05) * Zusammenfassung * | 1 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 5. März 2002 | Felicetti, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 12 2992

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 4084774 | A | 18-04-1978 | GB | 1514582 A | 14-06-1978 |
| US 5942685 | A | 24-08-1999 | JP | 3147786 B2 | 19-03-2001 |
| | | | JP | 10078449 A | 24-03-1998 |
| | | | DE | 19738358 A1 | 16-04-1998 |
| EP 0557917 | A | 01-09-1993 | DE | 9202533 U1 | 23-04-1992 |
| | | | EP | 0557917 A1 | 01-09-1993 |
| | | | JP | 5340963 A | 24-12-1993 |
| DE 3600763 | A | 16-07-1987 | DE | 3600763 A1 | 16-07-1987 |
| GB 2146775 | A | 24-04-1985 | KEINE | | |
| JP 62067601 | A | 27-03-1987 | KEINE | | |
| JP 05053658 | A | 05-03-1993 | KEINE | | |

EPO FORM P0461

Für nähere Einzelheiten zu diesem Anhang : siehe Amtsblatt des Europäischen Patentamts, Nr.12/82